# EUROPEAN PATENT APPLICATION

(11) **EP 3 361 380 A1**
(43) Date of publication of application: **15.08.2018**
(21) Application number: 15911736.5
(22) Date of filing: 29.12.2015
(51) Int. Cl.: G06F 9/445

(54) **METHOD AND APPARATUS FOR SORTING A PLURALITY OF OPTIONS AND TERMINAL**

(71) Applicant: Huawei Technologies Co., Ltd., Longgang District Shenzhen, Guangdong 518129 (CN)
(72) Inventor: WANG, Hongjun, Shenzhen, Guangdong 518129 (CN)
(74) Representative: Pfenning, Meinig & Partner mbB
(86) International application number: PCT/CN2015/099483
(87) International publication number: WO 2017/113105

(57) **Abstract**

Embodiments of the present invention provide a method and an apparatus for sorting multiple options, and a terminal, and relate to the mobile terminal field, to improve user operation efficiency. The terminal has M operation objects and N operation interfaces, each operation interface includes operation locations distributed in m rows and n columns, each operation object is corresponding to one bonus point value, and the M operation objects are arranged at operation locations of at least one operation interface in descending order of bonus point values. An operation instruction is received from a user when multiple operation objects that are located on a current operation interface of the terminal and that include a first operation object are displayed on the current operation interface. A bonus point value of the first operation object is increased by a first preset bonus point value according to the operation instruction, to obtain a current bonus point value of the first operation object. The M operation objects are arranged at operation locations of at least one operation interface. A first operation interface on which the first operation object is located is displayed. The embodiments of the present invention are applied to the terminal.

## Description

### TECHNICAL FIELD

Embodiments of the present invention relate to the field of mobile terminal technologies, and in particular, to a method and an apparatus for sorting multiple options, and a terminal.

### BACKGROUND

To make a user conveniently view a terminal, a function option corresponding to a terminal function is usually set on an operation interface of the terminal, and each function option has a unique function option address. With development of science and technology and an increase of terminal functions, there are more function options that need to be displayed on the operation interface of the terminal. However, because display space of the operation interface of the terminal is limited, if the function options of the terminal are not orderly sorted, it becomes more difficult to search for a function option, and operation efficiency is reduced.

In the prior art, a manner in which the function options of the terminal are orderly sorted includes fixed sorting and sorting according to a usage time order. For the fixed sorting, an internal system of the terminal sorts the function options in advance according to the unique function option addresses corresponding to the function options, displays the function options on the operation interface of the terminal according to the sorting order, and provides a function for the user to manually adjust the sorting of the function options. For the sorting according to the usage time order, the internal system of the terminal arranges a latest used function option each time at the front of all the function options on the operation interface of the terminal according to a function option address corresponding to the function option, and successively arranges other function options after the function option according to usage time.

In conclusion, when the fixed sorting is used, the user needs to manually adjust an order of the function options, so that sorting of the function options can meet an operation habit of the user, and an operation is relatively complex and imposes a relatively high requirement on the user. When the sorting according to the usage time order is used, if the user newly uses a rarely used function option, the rarely used function option can be arranged backwards after other function options are used multiple time, and the rarely used function option always takes up a forward location of the operation interface of the terminal before the rarely used function option is arranged backwards. Consequently, not only space of the operation interface of the terminal is wasted, but also operation efficiency is reduced.

### SUMMARY

Embodiments of the present invention provide a method and an apparatus for sorting multiple options, and a terminal, to improve user operation efficiency.

To achieve the foregoing objective, the embodiments of the present invention use the following technical solutions:
According to a first aspect, an embodiment of the present invention provides a method for sorting multiple options, where the method is applied to a terminal, the terminal has M operation objects and N operation interfaces, each operation interface includes operation locations distributed in m rows and n columns, each operation object is corresponding to one bonus point value, and the M operation objects are arranged at operation locations of at least one operation interface in descending order of bonus point values, where N, m, n, and M are positive integers greater than or equal to 1, and the method includes:
receiving an operation instruction from a user when multiple operation objects that are located on a current operation interface of the terminal and
that include a first operation object are displayed on the current operation interface;
increasing a bonus point value of the first operation object by a first preset bonus point value according to the operation instruction, to obtain a current bonus point value of the first operation object;
arranging the M operation objects at operation locations of at least one operation interface in descending order of current bonus point values of the M operation objects; and
displaying a first operation interface on which the first operation object is located.

With reference to the first aspect, in a first possible implementation of the first aspect, the arranging the M operation objects at operation locations of at least one operation interface in descending order of current bonus point values of the M operation objects includes:
if there are two or more operation objects whose corresponding bonus point values are equal in the M operation objects, obtaining usage frequencies of the operation objects with equal bonus point values; and
sorting the operation objects with equal bonus point values in descending order of the usage frequencies of the operation objects with equal bonus point values; or
if there are two or more operation objects whose corresponding bonus point values are equal in the operation objects, obtaining usage time of the operation objects with equal bonus point values; and
according to the usage time of the operation objects with equal bonus point values, successively sorting the operation objects with equal bonus point values according to latest usage time of the operation objects.

With reference to the first aspect, in a second possible implementation of the first aspect, after the displaying a first operation interface on which the first operation object is located, the method further includes:
obtaining a current location at which the first operation object is located on the first operation interface, where the current location is an order of an operation location at which the first operation object is arranged on the first operation interface;
if the current location at which the first operation object is located on the first operation interface is not a preset location, changing the current bonus point value of the first operation object into a second preset bonus point value, where the second preset bonus point value is a bonus point value corresponding to an operation object arranged at the preset location;
after the current bonus point value of the first operation object is changed into the second preset bonus point value, arranging the M operation objects at operation locations of at least one operation interface in descending order of current bonus point values of the M operation objects; and
displaying a second operation interface on which the first operation object is located.

With reference to the first aspect, in a third possible implementation of the first aspect, after the displaying a first operation interface on which the first operation object is located, the method further includes:
obtaining a current location at which the first operation object is located on the first operation interface, where the current location is an order of an operation location at which the first operation object is arranged on the first operation interface;
if the current location at which the first operation object is located on the first operation interface is after a preset location, changing the current bonus point value of the first operation object into a second preset bonus point value, where the second preset bonus point value is a bonus point value corresponding to an operation object arranged at the preset location;
after the current bonus point value of the first operation object is changed into the second preset bonus point value, arranging the first operation object at the preset location, and successively arranging the operation object located at the preset location and a remaining operation object at operation locations after the preset location, where the remaining operation object is an operation object at at least one operation location after the preset location; and
displaying a second operation interface on which the first operation object is located.

With reference to the third possible implementation of the first aspect, in a fourth possible implementation of the first aspect, after the arranging the first operation object at the preset location, the method further includes:
obtaining a current bonus point value of a second operation object, where the second operation object is an operation object at an operation location that is located before the preset location and that is adjacent to the preset location, and an operation object at the adjacent operation location is arranged at an operation location before the preset location in descending order of the bonus point values; and
if the bonus point value corresponding to the first operation object is greater than or equal to the bonus point value corresponding to the second operation object, moving the first operation object to the operation location at which the second operation object is located, and moving the second operation object to the preset location at which the first operation object is located.

According to a second aspect, an embodiment of the present invention provides an apparatus for sorting multiple options, where the apparatus is applied to a terminal, the terminal has M operation objects and N operation interfaces, each operation interface includes operation locations distributed in m rows and n columns, each operation object is corresponding to one bonus point value, and the M operation objects are arranged at operation locations of at least one operation interface in descending order of bonus point values, where N, m, n, and M are positive integers greater than or equal to 1, and the apparatus includes:
a receiving unit, configured to receive an operation instruction from a user when multiple operation objects that are located on a current operation interface of the terminal and that include a first operation object are displayed on the current operation interface;
a first obtaining unit, configured to: increase a bonus point value of the first operation object by a first preset bonus point value according to the operation instruction, to obtain a current bonus point value of the first operation object;
a sorting unit, configured to arrange the M operation objects at operation locations of at least one operation interface in descending order of current bonus point values of the M operation objects; and
a display unit, configured to display a first operation interface on which the first operation object is located.

With reference to the second aspect, in a first possible implementation of the second aspect, the sorting unit includes:
a first determining module, configured to determine whether there are two or more operation objects whose corresponding bonus point values are equal in the M operation objects;
a first obtaining module, configured to: when the first determining module determines that there are two or more operation objects whose corresponding bonus point values are equal in the M operation objects, obtain usage frequencies of the operation objects with equal bonus point values; and
a first sorting module, configured to: after the first obtaining module obtains the usage frequencies of the operation objects with equal bonus point values, sort the operation objects with equal bonus point values in descending order of the usage frequencies; or
a second obtaining module, configured to: when the first determining module determines that there are two or more operation objects whose corresponding bonus point values are equal in the M operation objects, obtain usage time of the operation objects with equal bonus point values; and
a second sorting module, configured to: after the second obtaining module obtains the usage time of the operation objects with equal bonus point values, successively sort the operation objects with equal bonus point values according to latest usage time of the operation objects.

With reference to the second aspect, in a second possible implementation of the second aspect, the apparatus further includes:
a second obtaining unit, configured to obtain a current location at which the first operation object is located on the first operation interface, where the current location is an order of an operation location at which the first operation object is arranged on the first operation interface;
a first determining unit, configured to determine whether the current location at which the first operation object is located on the first operation interface is a preset location; and
a first update unit, configured to: after the first determining unit determines that the current location at which the first operation object is located on the first operation interface is not the preset location, change the current bonus point value of the first operation object into a second preset bonus point value, where the second preset bonus point value is a bonus point value corresponding to an operation object arranged at the preset location; and
after the current bonus point value of the first operation object is changed into the second preset bonus point value, arrange the M operation objects at operation locations of at least one operation interface in descending order of current bonus point values of the M operation objects; and
the display unit is further configured to: after the first update unit arranges the M operation objects at operation locations of at least one operation interface in descending order of the current bonus point values of the M operation objects, display a second operation interface on which the first operation object is located.

With reference to the second aspect, in a third possible implementation of the second aspect, the apparatus further includes:
a third obtaining unit, configured to obtain a current location at which the first operation object is located on the first operation interface, where the current location is an order of an operation location at which the first operation object is arranged on the first operation interface;
a second determining unit, configured to determine whether the current location at which the first operation object is located on the first operation interface is after a preset location; and
a second update unit, configured to: change the current bonus point value of the first operation object into a second preset bonus point value, where the second preset bonus point value is a bonus point value corresponding to an operation object arranged at the preset location; and
after the current bonus point value of the first operation object is changed into the second preset bonus point value, arrange the first operation object at the preset location, and successively arrange the operation object located at the preset location and a remaining operation object at operation locations after the preset location, where the remaining operation object is an operation object at at least one operation location after the preset location; and
the display unit is further configured to: after the second update unit arranges the first operation object at the preset location, and successively arranges the operation object located at the preset location and the remaining operation object at the operation locations after the preset location, display a second operation interface on which the first operation object is located.

With reference to the third possible implementation of the second aspect, in a fourth possible implementation of the second aspect, the apparatus further includes: a fourth obtaining unit, a third determining unit, and a first sorting unit;
the fourth obtaining unit is configured to: after the second update unit arranges the first operation object at the preset location, obtain a current bonus point value of a second operation object, where the second operation object is an operation object at an operation location that is located before the preset operation location and that is adjacent to the preset operation location, and an operation object at the adjacent operation location is arranged at an operation location before the preset operation location in descending order of the bonus point values;
the third determining unit is configured to determine whether the bonus point value corresponding to the first operation object is greater than or equal to the bonus point value corresponding to the second operation object; and
the first sorting unit is configured to: if the third determining unit determines that the bonus point value corresponding to the first operation object is greater than or equal to the bonus point value corresponding to the second operation object, move the first operation object to the operation location at which the second operation object is located, and move the second operation object to the preset location at which the first operation object is located.

According to a third aspect, an embodiment of the present invention further provides a terminal, where the terminal has M operation objects and N operation interfaces, each operation interface includes operation locations distributed in m rows and n columns, each operation object is corresponding to one bonus point value, and the M operation objects are arranged at operation locations of at least one operation interface in descending order of bonus point values, where N, m, n, and M are positive integers greater than or equal to 1, and the terminal includes: at least one processor, at least one touchscreen, and a memory, and the memory is configured to store executable program code;
the touchscreen is configured to receive an operation instruction from a user when multiple operation objects that are located on a current operation interface of the terminal and that include a first operation object are displayed on the current operation interface; and
the processor runs a program corresponding to the executable program code by reading the executable program code stored in the memory, so as to:
   increase a bonus point value of the first operation object by a first preset bonus point value according to the operation instruction, to obtain a current bonus point value of the first operation object;
   arrange the M operation objects at operation locations of at least one operation interface in descending order of current bonus point values of the M operation objects; and
   display a first operation interface on which the first operation object is located.

According to the method for sorting multiple options in the embodiments of the present invention, a bonus point value is assigned to each operation object, after the operation instruction of the user is received, the first operation object is increased by the first preset bonus point value, and then, the M operation objects are sorted in descending order of the bonus point values and displayed on the first operation interface of the terminal. The method provided in the embodiments of the present invention is simple, and when a bonus point value of any operation object changes, only corresponding bonus point value ranking needs to be obtained according to the updated bonus point value and then displayed. The method is easy to operate, and the operation objects can be dynamically sorted, so that user experience efficiency is improved.

### BRIEF DESCRIPTION OF DRAWINGS

To describe the technical solutions in the embodiments of the present invention more clearly, the following briefly describes the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.
FIG. 1 is a first schematic flowchart of a method for sorting multiple options according to an embodiment of the present invention;
FIG. 2A and FIG. 2B are a first schematic diagram of an operation interface of a method for sorting multiple options according to an embodiment of the present invention;
FIG. 3a-1 and FIG. 3a-2 are a second schematic diagram of an operation interface of a method for sorting multiple options according to an embodiment of the present invention;
FIG. 3b-1, FIG. 3b-2, and FIG. 3b-3 are a third schematic diagram of an operation interface of a method for sorting multiple options according to an embodiment of the present invention;

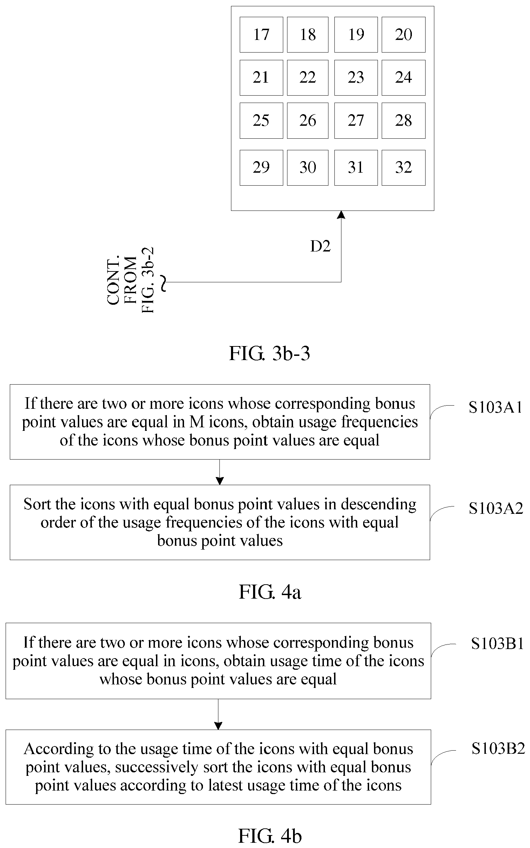

FIG. 4a is a second schematic flowchart of a method for sorting multiple options according to an embodiment of the present invention;
FIG. 4b is a third schematic flowchart of a method for sorting multiple options according to an embodiment of the present invention;

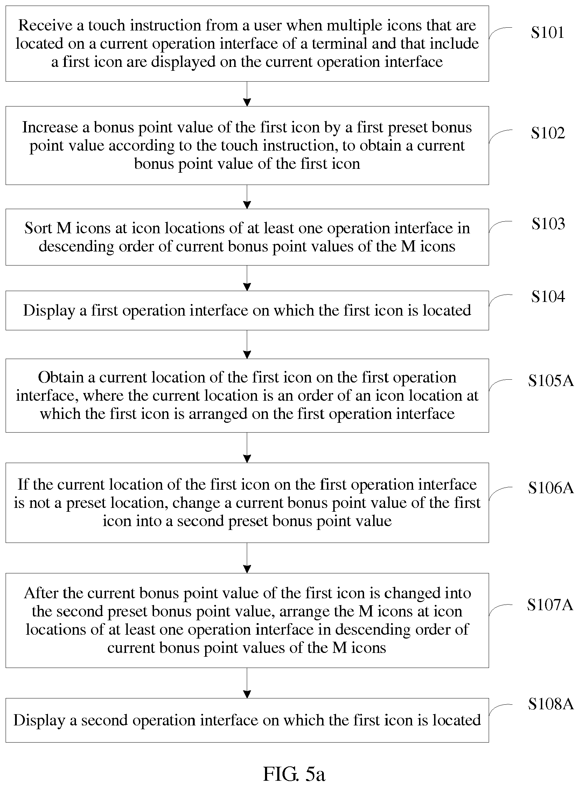

FIG. 5a is a fourth schematic flowchart of a method for sorting multiple options according to an embodiment of the present invention;

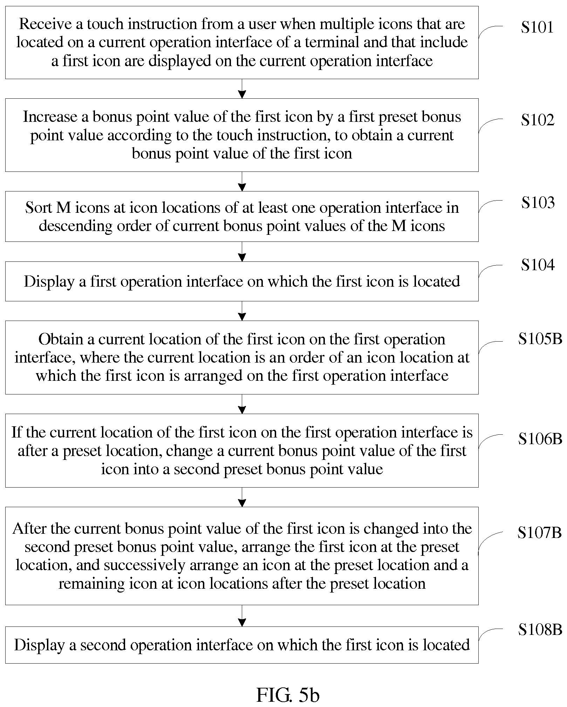

FIG. 5b is a fifth schematic flowchart of a method for sorting multiple options according to an embodiment of the present invention;

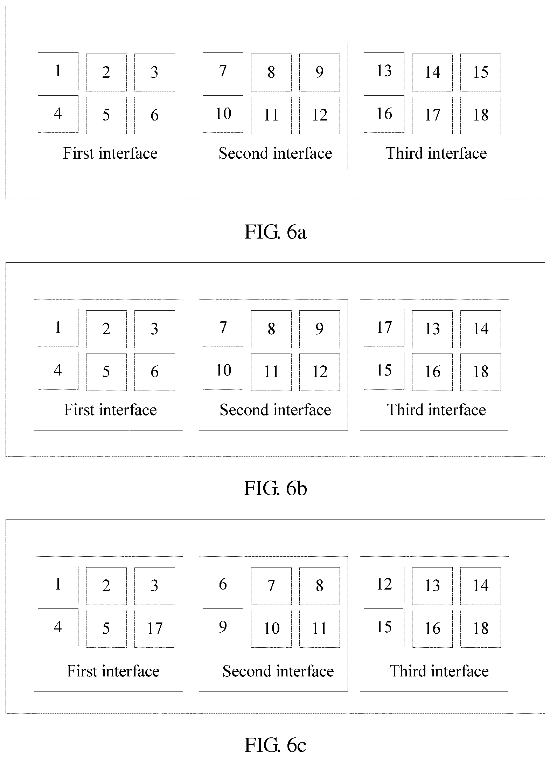

FIG. 6a is a fourth schematic diagram of an operation interface of a method for sorting multiple options according to an embodiment of the present invention;
FIG. 6b is a fifth schematic diagram of an operation interface of a method for sorting multiple options according to an embodiment of the present invention;
FIG. 6c is a sixth schematic diagram of an operation interface of a method for sorting multiple options according to an embodiment of the present invention;

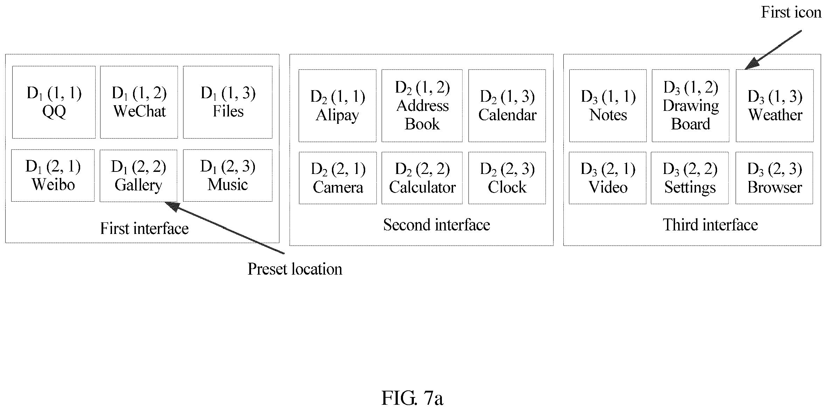

FIG. 7a is a seventh schematic diagram of an operation interface of a method for sorting multiple options according to an embodiment of the present invention;

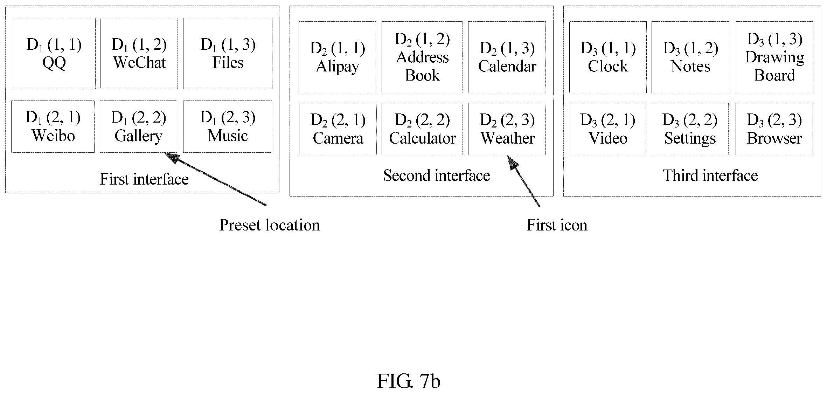

FIG. 7b is an eighth schematic diagram of an operation interface of a method for sorting multiple options according to an embodiment of the present invention;

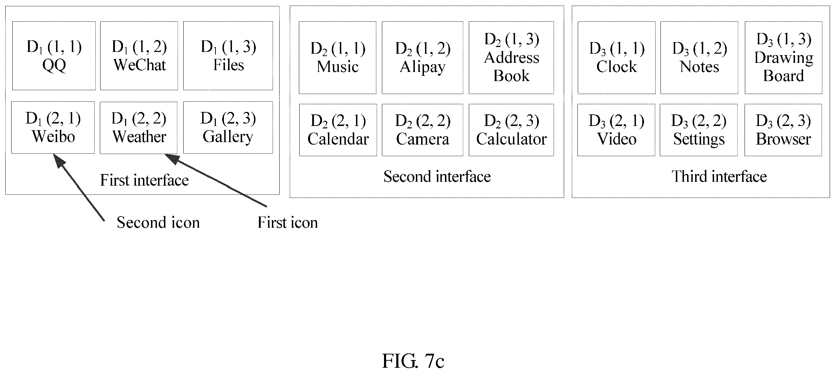

FIG. 7c is a ninth schematic diagram of an operation interface of a method for sorting multiple options according to an embodiment of the present invention;

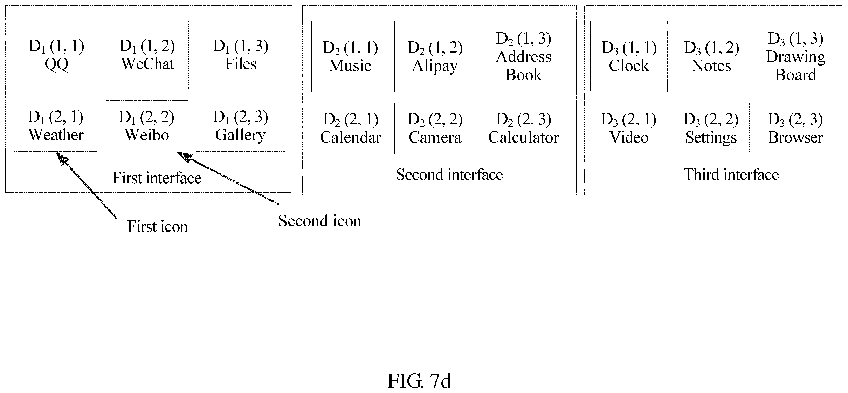

FIG. 7d is a tenth schematic diagram of an operation interface of a method for sorting multiple options according to an embodiment of the present invention;

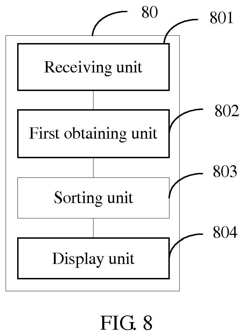

FIG. 8 is a first schematic structural diagram of an apparatus for sorting multiple options according to an embodiment of the present invention;

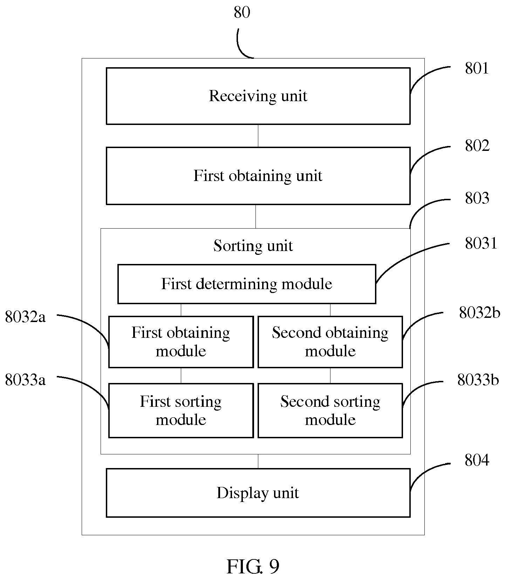

FIG. 9 is a second schematic structural diagram of an apparatus for sorting multiple options according to an embodiment of the present invention;

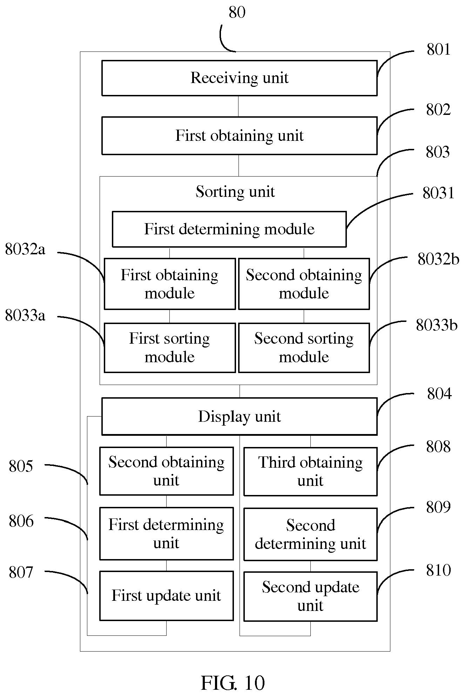

FIG. 10 is a third schematic structural diagram of an apparatus for sorting multiple options according to an embodiment of the present invention; and

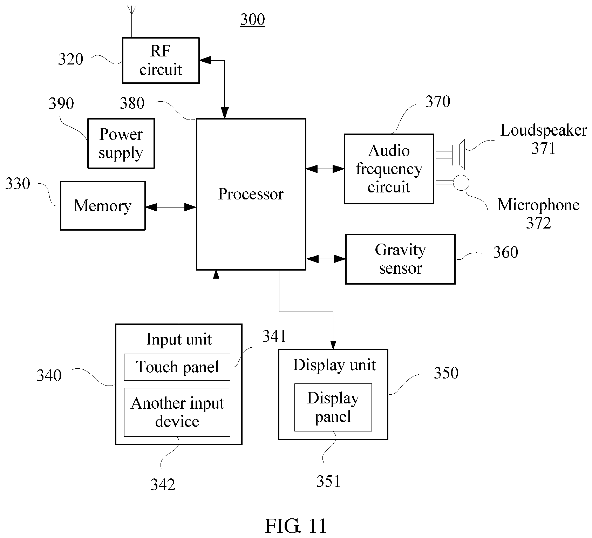

FIG. 11 is a schematic structural diagram of a terminal according to an embodiment of the present invention.

### DESCRIPTION OF EMBODIMENTS

Principles of embodiments of the present invention are as follows:
The embodiments of the present invention intend to resolve a prior-art technical problem that when operation objects on a terminal are sorted in a fixed order or in a usage time order, an operation is relatively complex, a relatively high requirement is imposed on a user, and operation efficiency is low. In a specific implementation process, a terminal in the embodiments of the present invention may be an intelligent terminal with a touch device, including but not limited to: an electronic device such as a mobile phone, a tablet computer, and an e-book. The touch device in the embodiments of the present invention includes a touchscreen, a touchscreen sensor, and a touchscreen controller. The touchscreen sensor is configured to detect an operation instruction of a user, and the operation instruction may be a touch instruction of the user, or may be a selection instruction of the user. After the touchscreen receives the operation instruction, the touchscreen sensor sends the operation instruction to the touchscreen controller. A main function of the touchscreen controller is to receive touch information from the touchscreen sensor, convert the touch information into touch point coordinates, and then send the touch point coordinates to a processor of the terminal. In addition, the touchscreen controller can receive and execute a command sent from the processor of the terminal. For example, the touchscreen controller may increase any operation object by a first preset bonus point value after the operation object is tapped, and may dynamically sort, in descending order of bonus point values, M operation objects displayed on an operation interface and implement switching between N operation interfaces on the terminal. In the embodiments of the present invention, the user touches, by using a finger or another object, the touchscreen installed on the front of the terminal; then, the touchscreen sensor locates touch information according to an operation object or a menu position touched by the finger of the user, and transfers the touch information to the touch controller; the touchscreen controller converts the touch information into touch point coordinates, so as to determine the operation object selected by the user, and the touchscreen controller increases the operation object selected by the user by a first preset bonus point value; after the increment of the first preset bonus point value, the processor sorts all operation objects of the terminal according to a preset rule. In the method for sorting multiple options, the processor arranges operation objects on each operation interface at operation locations of the operation interface in descending order of bonus point values, and when a bonus point value of any operation object changes, the processor of the terminal may sort the M operation objects according to the preset rule, so that the operation objects can be dynamically sorted, a prior-art problem of a complex operation and low operation efficiency is resolved, and a requirement for the user is reduced.

The touchscreen of the terminal may be a capacitive touchscreen, or may be a resistive touchscreen. This is not limited in the embodiments of the present invention. The operation object in the embodiments of the present invention may be each icon on the terminal or each contact in an address book of the terminal.

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by persons of ordinary skill in the art based on the embodiments of the present invention without creative efforts shall fall within the protection scope of the present invention.

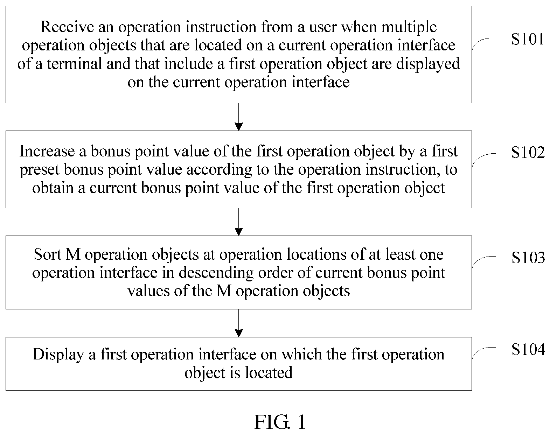

An embodiment of the present invention provides a method for sorting multiple options. The method is applied to a terminal. The terminal has M operation objects and N operation interfaces, each operation interface includes operation locations distributed in m rows and n columns, each operation object is corresponding to one bonus point value, and the M operation objects are arranged at operation locations of at least one operation interface in descending order of bonus point values, where N, m, n, and M are positive integers greater than or equal to 1. As shown in FIG. 1, the method includes the following steps:
S101. Receive an operation instruction from a user when multiple operation objects that are located on a current operation interface of the terminal and that include a first operation object are displayed on the current operation interface.
S102. Increase a bonus point value of the first operation object by a first preset bonus point value according to the operation instruction, to obtain a current bonus point value of the first operation object.
S103. Arrange the M operation objects at operation locations of at least one operation interface in descending order of current bonus point values of the M operation objects. S104. Display a first operation interface on which the first operation object is located. According to the method for sorting multiple options in this embodiment of the present invention, a bonus point value is assigned to each operation object, after the operation instruction of the user is received, the first operation object is increased by the first preset bonus point value, and then, the M operation objects are sorted in descending order of the bonus point values and displayed on the first operation interface of the terminal. The method provided in this embodiment of the present invention is simple, and when a bonus point value of any operation object changes, only corresponding bonus point value ranking needs to be obtained according to the updated bonus point value and then displayed. The method is easy to operate, and the operation objects can be dynamically sorted, so that user experience efficiency is improved.

It should be noted that the method for sorting multiple options and an apparatus for sorting multiple options in this embodiment of the present invention may be executed by the processor of the terminal.

The operation object in this embodiment of the present invention may be an operation object (for example, a system tool, a calendar, and an address book) corresponding to an application program that is preinstalled on a terminal system (for example, an Android system, an iOS, or a Windows Phone) when the terminal is delivered, or may be an operation object corresponding to an application program that is installed by the user in a memory of the terminal or in an expansion card of the terminal. This is not limited in this embodiment of the present invention.

The contact in the terminal address book in this embodiment of the present invention includes a contact (for example, a terminal customer service number, 119, and 120) that is prestored in a terminal address book list by the terminal system when the terminal is delivered, or may be a contact (for example, Zhang San and 13100000000) that is created in the terminal address book list by the user. This is not limited in this embodiment of the present invention.

The intelligent terminal in this embodiment of the present invention includes N interfaces, for example, a first operation interface, a second operation interface, ..., and an N^{th} operation interface. The N operation interfaces may be switched to each other, that is, the first operation interface may be switched to the second operation interface, or the second operation interface may be switched to the first operation interface, or the second operation interface may be switched to a third operation interface, or the like. The M operation interfaces each include some operation locations used for arranging the operation objects. The M operation objects on the N interfaces may be moved on the operation interfaces by using an operation of the processor of the terminal. For example, an operation object located on the first operation interface may be moved to the second operation interface, or may be moved to the N^{th} operation interface. Specific values of M, N, m, and n are not limited in this embodiment of the present invention, and may be set according to a requirement. When the operation object is the address book of the terminal, N is equal to 1, M is greater than or equal to 2, and m and n are equal to 1.

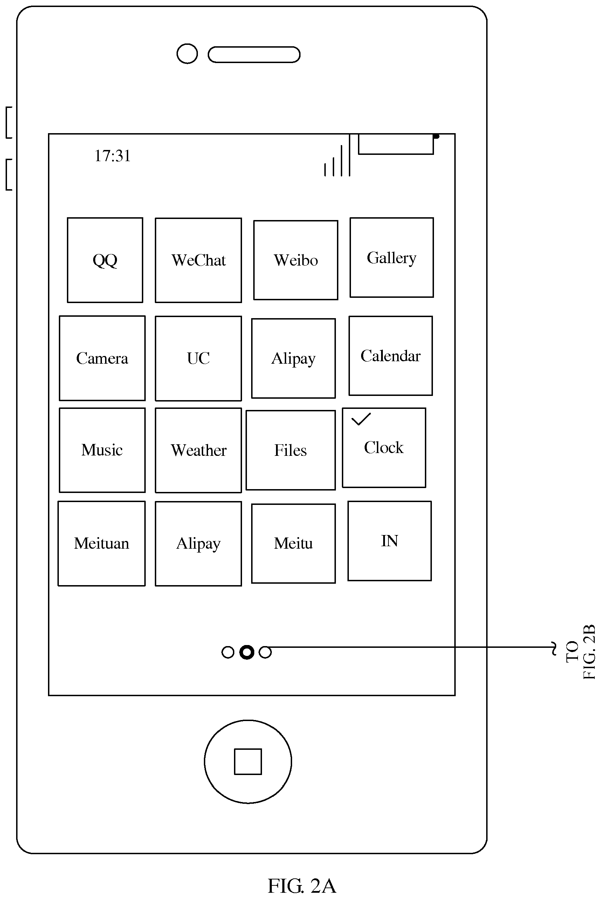

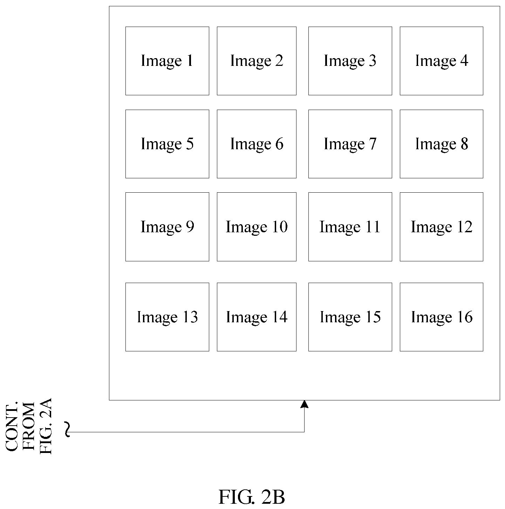

For example, an icon on an intelligent terminal is used as an example in this embodiment of the present invention. As shown in FIG. 2A and FIG. 2B, the intelligent terminal includes three interfaces (because the first operation interface is any one of the operation interfaces of the terminal, to avoid ambiguity, the operation interface of the intelligent terminal in FIG. 2A and FIG. 2B in this embodiment of the present invention is referred to as an interface) (an interface in FIG. 2A is a current interface, and an interface in FIG. 2B is a third interface), each interface includes 16 operation locations, and the 16 operation locations are arranged on each interface in a 4×4 form.

The first operation interface in this embodiment of the present invention is any one of the N operation interfaces, and has no indicative meaning. The first operation interface may be a new interface on which the first operation object is located after the bonus point value of the first operation object is increased and the first operation object is sorted according to the bonus point value, or may be a current operation interface (that is, after being sorted according to the bonus point value, the first operation object is still on an interface on which the first operation object is located before the bonus point value is increased). This is not limited in this embodiment of the present invention.

It should be noted that, the M operation objects sorted according to the bonus point values may be first arranged at all operation locations of a first interface, and then, remaining operation objects are successively arranged on a second interface or a third interface. Alternatively, a part of operation objects (for example, six operation objects) may be arranged at operation locations of a first interface, and then, remaining (M-6) operation objects are arranged on a second interface. This is not limited in this embodiment of the present invention. The interface in this embodiment of the present invention may be added according to a user requirement, an interface adding manner is a relatively mature technology in the prior art, and details are not described herein in this embodiment of the present invention. It should be noted that a newly added interface and an existing interface may be switched to each other, and operation objects may be moved between the newly added interface and the existing interface. A current operation interface (the operation interface shown in FIG. 2A) is any one of all the operation interfaces of the terminal, and the current operation interface includes a first operation object that needs to be moved by the user. For example, the first operation object is a clock operation object, as shown in FIG. 2A. A form in which the first operation object selected by the user is displayed on the current operation interface is not limited in this embodiment of the present invention, and is merely an example. As shown in FIG. 2A, a check mark (√ is used as an example) on the upper left corner of the clock operation object indicates an operation object that needs to be moved by the user, that is, an operation instruction of the user is received. A specific value of one bonus point value corresponding to each operation object is not limited in this embodiment of the present invention, and may be initially set according to a requirement. For example, initially, if a bonus point value of 8 points is assigned to QQ, 7 points is assigned to WeChat, 2 points is assigned to Files, 4 points is assigned to Gallery, and 3 points is assigned to Alipay, the processor sorts the operation objects in descending order of the bonus point values, for example, QQ, WeChat, Gallery, Alipay, and Files.

A specific value of a first preset bonus point value is not limited in this embodiment of the present invention, and may be set according to a selection. Preferably, the first preset bonus point value may be set to 1 point. For example, after the user taps Gallery, a bonus point value of Gallery is updated to 5 points.

A manner in which the user triggers the operation instruction is not limited in this embodiment of the present invention, provided that a touch sensor connected to the touchscreen detects a preset parameter included in the operation instruction when the user touches the touchscreen of the terminal. For example, the user touches & holds the operation object or taps the operation object.

For ease of orderly moving each operation object, each operation object in this embodiment of the present invention is corresponding to one specific location on the operation interface. A manner in which specific locations of the M operation objects on each operation interface are indicated is not limited in this embodiment of the present invention.

For example, in a possible implementation, each operation object may be stored in a memory of the terminal in a coordinate form. As shown in FIG. 3a-1 and FIG. 3a-2, a two-dimensional coordinate system may be set on each operation interface, an X axis of the coordinate system is a lower boundary of the operation interface, a Y axis is a left boundary of the operation interface that is adjacent to the lower boundary, and any location on the operation interface may be identified by using a coordinate (m, n) in the coordinate system. For example, any operation location or operation object on the operation interface may be indicated by using a location DN (m, n) in the coordinate system. DN is a preset location located on the N^{th} operation interface, and m and n are a row coordinate and a column coordinate. Because operation locations are distributed in an m×n form, each operation location may be considered as one coordinate (m, n), or an operation object located at each operation location may be considered as one coordinate (m, n). As shown in FIG. 3a-1 and FIG. 3a-2, for example, on the current operation interface, a coordinate of the clock operation object (corresponding to a clock application program) is D2 (3, 4), and a coordinate of the QQ operation object (corresponding to a QQ application program) is D2 (1, 1).

For example, in another possible implementation, the operation objects may be arranged according to serial numbers. For example, initially, operation locations on each interface may be numbered, serial numbers of adjacent operation locations are consecutive, and a serial number of the first operation location on a current interface and a serial number of the last operation location on an interface that is before and adjacent to the current interface are consecutive. For example, serial numbers of operation locations on the first interface are from 1 to mn, serial numbers of operation locations on the second interface are from mn+1 to 2mn+1, and serial numbers of operation locations on remaining (N-2) interfaces may be analogized according to this. Details are not described herein in this embodiment of the present invention. For example, as shown in FIG. 3b-1, FIG. 3b-2, and FIG. 3b-3, if the serial numbers of the operation locations on the first interface are (1-16), the serial numbers of the operation locations on the second interface (the current interface) are (17-32), and for the serial numbers of the operation locations on the remaining (N-2) interfaces, refer to the serial numbers of the operation locations on the first interface and the second interface. Details are not described herein in this embodiment of the present invention.

A manner in which the operation locations on each interface are numbered is not limited in this embodiment of the present invention. Numbering may be performed by using Arabic numbers (such as serial numbers shown in FIG. 3b-1, FIG. 3b-2, and FIG. 3b-3), or numbering may be performed by using English alphabets from A to Z, provided that each operation location is corresponding to one serial number. When numbering is performed by using the English alphabets from A to Z, the interfaces may be distinguished by using 1A-1Z, 2A-2Z, or NA-NZ.

A specific implementation of step S103 is not limited in this embodiment of the present invention. After the bonus point value of each operation object is obtained, the processor can sort all the operation objects according to a sorting instruction stored in the memory. Details are not described herein in this embodiment of the present invention.

However, in a specific implementation process, after the bonus point value of the first operation object is increased, or because of a touch operation of the user, the bonus point values of the M operation objects change. For example, bonus point values of any two operation objects in the M operation objects may be equal. Preferably, usage frequencies or usage time of operation objects with equal bonus point values may be obtained to sort the operation objects with equal bonus point values in this embodiment of the present invention, so that the processor of the terminal in this embodiment of the present invention can methodically sort all the operation objects. For example, in a possible implementation, as shown in FIG. 4a, step S103 specifically includes the following steps:
S103A1. If there are two or more operation objects whose corresponding bonus point values are equal in the M operation objects, obtain usage frequencies of the operation objects with equal bonus point values.
S103A2. Sort the operation objects with equal bonus point values in descending order of the usage frequencies of the operation objects with equal bonus point values.

The usage frequency is a quantity of time of tapping each operation object by the user within a preset time period. The usage frequency of each operation object may be stored in the memory of the terminal. The usage frequency may be obtained from the memory of the terminal by using the processor of the terminal. For example, a quantity of time of tapping an operation object by the user within a preset time period may be implemented by using a detection module disposed in the terminal. If the user taps a QQ operation object shown in FIG. 2A 10 time, a WeChat operation object eight time, and a Files operation object once between 8:00 a.m. and 12:00 a.m. on December 31, the detection module collects statistics about the quantities of time and stores the quantities of time in the memory.

After the WeChat operation object is tapped, a current bonus point value of the WeChat operation object changes into 8 points, and is equal to a bonus point value of the QQ operation object. The processor of the terminal obtains usage frequencies of the operation objects (the QQ operation object and the WeChat operation object) with equal bonus point values from a storage module, and then sorts the operation objects with equal bonus point values according to the usage frequencies, for example, the QQ operation object and the WeChat operation object.

For example, in another possible implementation, as shown in FIG. 4b, step S103 specifically includes the following steps:
S103B1. If there are two or more operation objects whose corresponding bonus point values are equal in the operation objects, obtain usage time of the operation objects with equal bonus point values.
S103B2. According to the usage time of the operation objects with equal bonus point values, successively sort the operation objects with equal bonus point values according to latest usage time of the operation objects.

The usage time is a time at which the user taps each operation object, the usage time may be stored in the memory of the terminal, and the usage time may be obtained from the memory of the terminal by using the processor of the terminal. The detection module detects a time at which the user uses each operation object, and stores a latest time of using each operation object in the memory. For example, a time of using the QQ operation object is 8:01 on October 1, 2015, a time of using WeChat is 12:05 on October 1, 2015, and a time of using Files is 23:01 on September 30, 2015. For example, after the WeChat operation object is tapped, a current bonus point value of the WeChat operation object changes into 8 points, and is equal to the bonus point value of the QQ operation object. The processor of the terminal obtains usage time of the operation objects (the QQ operation object and the WeChat operation object) with equal bonus point values from a storage module, and then sorts the operation objects with equal bonus point values according to proximity between the usage time and a current time, for example, the WeChat operation object and the QQ operation object. It should be noted that the sorting instruction may be stored in the memory of the terminal, and the processor runs a program corresponding to executable program code by reading the executable program code stored in the memory, for example, a sorting instruction for sorting the operation objects with equal bonus point values in descending order of usage frequencies, a sorting instruction for arranging the M operation objects at operation locations of at least one operation interface in descending order of the bonus point values, or a sorting instruction for successively sorting the operation objects with equal bonus point values according to latest usage time of the operation objects.

It should be noted that, sorting results may be different when the operation objects are sorted according to the usage time and the usage frequencies. Therefore, any usage manner of the usage time or the usage frequency may be preferably used when two or more operation objects with equal bonus point values need to be sorted.

In a specific implementation process, a first operation object is arranged at a preset location after an operation instruction of the user is obtained in this embodiment of the present invention, so that the first operation object that needs to be sorted by the user can be located at a location that conforms to a user habit. A specific location of the preset location is not limited in this embodiment of the present invention, and the preset location may be set according to the user habit. For example, the preset location may be set at the first location or an intermediate location on each operation interface, or may be set according to a posture the user holds the terminal, or the like. Preferably, a specific form of the preset location needs to be consistent with a location form of each operation object on the operation interface. For example, the preset location may be indicated by using a coordinate, or the preset location may be indicated by using a numerical order. This is not limited in this embodiment of the present invention. For example, if the preset location is D1 (1, 1), it indicates that the first operation object is to be moved to a first row and a first column of the first interface after the operation instruction is obtained, that is, the first operation object is to be located at the first location of the first interface. For example, if a serial number of the preset location is 6, it indicates that the first operation object is to be moved to the sixth operation location on the first interface. Alternatively, the preset location may be D1, and D1 indicates that the first operation object is to be moved to the first interface after the operation instruction is obtained (specifically, the first operation object may be located at any location on the first interface, provided that the first operation object is located on the first interface).

It should be noted that in this embodiment of the present invention, the specific location of the preset location may periodically change, and the preset location and a change date are stored in the memory of the terminal.

Preferably, as shown in FIG. 5a, after step S104, the method further includes the following steps:
S105A. Obtain a current location at which the first operation object is located on the first operation interface, where the current location is an order of an operation location at which the first operation object is arranged on the first operation interface.
S106A. If the current location at which the first operation object is located on the first operation interface is not a preset location, change the current bonus point value of the first operation object into a second preset bonus point value, where the second preset bonus point value is a bonus point value corresponding to an operation object arranged at the preset location.

There are two cases in which the current location at which the first operation object is located on the first operation interface is not the preset location. In a first case, the current location at which the first operation object is located and the preset location are on a same operation interface, but are not a same location. For example, if a serial number of the current location of the first operation object is 12 on the first operation interface, and a serial number of the preset location is 9 on the first operation interface, a bonus point value of the current location of the first operation object needs to be changed into a bonus point value of the preset location, so that the first operation object can be moved to an operation location corresponding to the preset location after the bonus point value is updated, that is, a serial number of the operation location is 9. In a second case, if the current location at which the first operation object is located and the preset location are not on a same operation interface, the current location is inevitably not the preset location. For example, if the preset location is at an operation location whose serial number is 1 on the first operation interface, and the current location of the first operation object after the first operation object is sorted is at an operation location whose serial number is 18 on a second operation interface, the current bonus point value of the first operation object needs to be changed into a bonus point value of the preset location, so that after the bonus point value is changed, the first operation object can be moved to the operation location whose serial number is 1 on the first operation interface. It should be noted that, after the first operation object is moved, an operation object at the preset location is still sorted according to a bonus point value, and arranged at a corresponding operation location. The operation object at the preset location may be located after the first operation object (in close proximity to the first operation object), or the operation object at the preset location may be moved to an operation location of an operation object that is some operation objects away from the first operation object. The moving rule is as follows: Sorting is performed according to the bonus point values of the operation object at the preset location and another operation object.

S107A. After the current bonus point value of the first operation object is changed into the second preset bonus point value, arrange the M operation objects at operation locations of at least one operation interface in descending order of current bonus point values of the M operation objects.

S108A. Display a second operation interface on which the first operation object is located.

For example, a serial number form is used as an example for description in this embodiment of the present invention. For example, as shown in FIG. 6a, a serial number of the first operation object is 17, and if a serial number of the preset location is on the first interface, that is, it indicates that the first operation object 17 located on a third interface is to be arranged on the first interface. After a bonus point value of the first operation object is increased by a first preset bonus point value, as shown in FIG. 6b, the first operation object 17 located on the third interface (that is, the first operation interface in S104) is adjusted to a location before a second operation object whose serial number is 13 by means of sorting according to the bonus point value. If the processor determines that a current location (on the third interface) of the first operation object is not the preset location (on the first interface), the bonus point value of the first operation object 17 is changed into a bonus point value corresponding to a last operation location on the first interface, that is, a bonus point value corresponding to a third operation object whose serial number is 6. The first operation object 17 is displayed on the first interface (the second operation interface in S108) after being sorted according to a bonus point value sorting rule, as shown in FIG. 6c.

Preferably, as shown in FIG. 5b, after step S104, the method further includes the following steps:
S105B. Obtain a current location at which the first operation object is located on the first operation interface, where the current location is an order of an operation location at which the first operation object is arranged on the first operation interface.
S106B. If the current location at which the first operation object is located on the first operation interface is after a preset location, change the current bonus point value of the first operation object into a second preset bonus point value, where the second preset bonus point value is a bonus point value corresponding to an operation object arranged at the preset location.
S107B. After the current bonus point value of the first operation object is changed into the second preset bonus point value, arrange the first operation object at the preset location, and successively arrange the operation object located at the preset location and a remaining operation object at operation locations after the preset location, where the remaining operation object is an operation object at at least one operation location after the preset location.
S108B. Display a second operation interface on which the first operation object is located.

For example, a serial number form is used as an example for description in this embodiment of the present invention. For example, as shown in FIG. 7a, a location of the first operation object is D3 (1, 3), and if the preset location is D1 (2, 2), it indicates that the first operation object on a third interface is to be arranged in a second row and a second column of the first interface. After the bonus point value of the first operation object is increased by a first preset bonus point value, as shown in FIG. 7b, a current location of the first operation object located on a second interface (that is, the first operation interface in S104) is D2 (2, 3) after the first operation object is sorted according to the bonus point value. If the processor determines that the current location D2 (2, 3) of the first operation object is not the preset location D1 (2, 2), the processor changes the bonus point value of the first operation object into a bonus point value corresponding to an operation object at the preset location D1 (2, 2), and the first operation object is displayed on a first interface (the second operation interface in S108) after being sorted according to a bonus point value sorting rule, as shown in FIG. 7c.

Further, preferably, for S107B, after the first operation object is arranged at the preset location, the method further includes the following steps:
S107B1. Obtain a current bonus point value of a second operation object, where the second operation object is an operation object at an operation location that is located before the preset location and that is adjacent to the preset location, and an operation object at the adjacent operation location is arranged at an operation location before the preset location in descending order of the bonus point values.

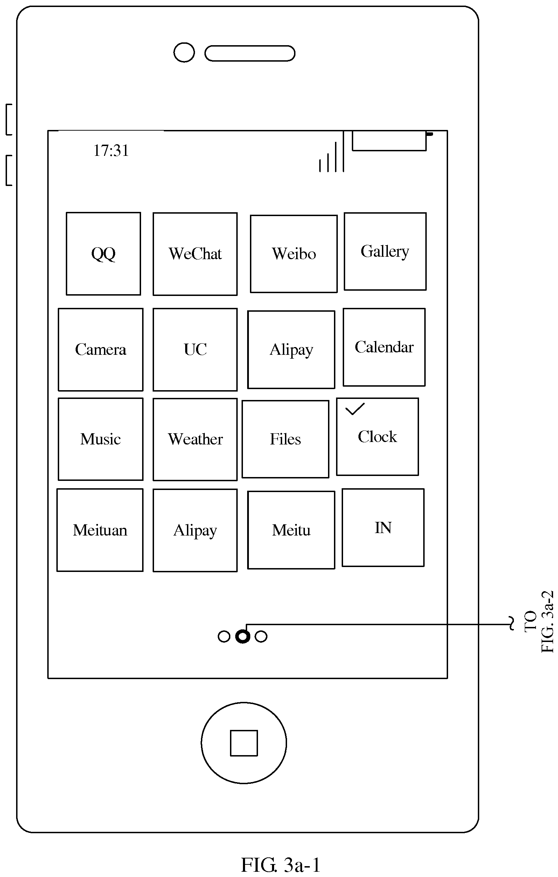

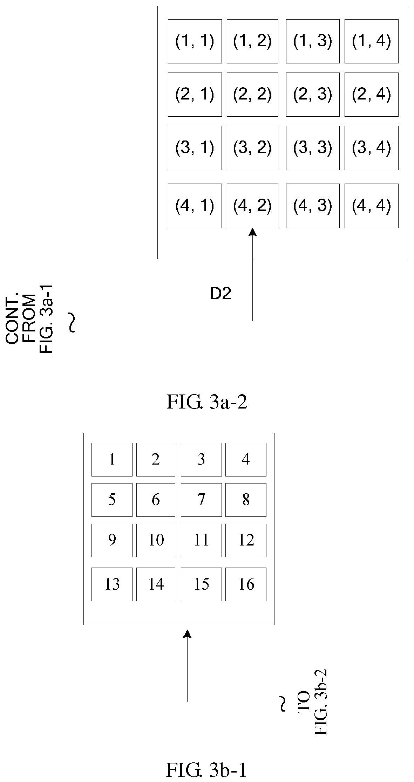

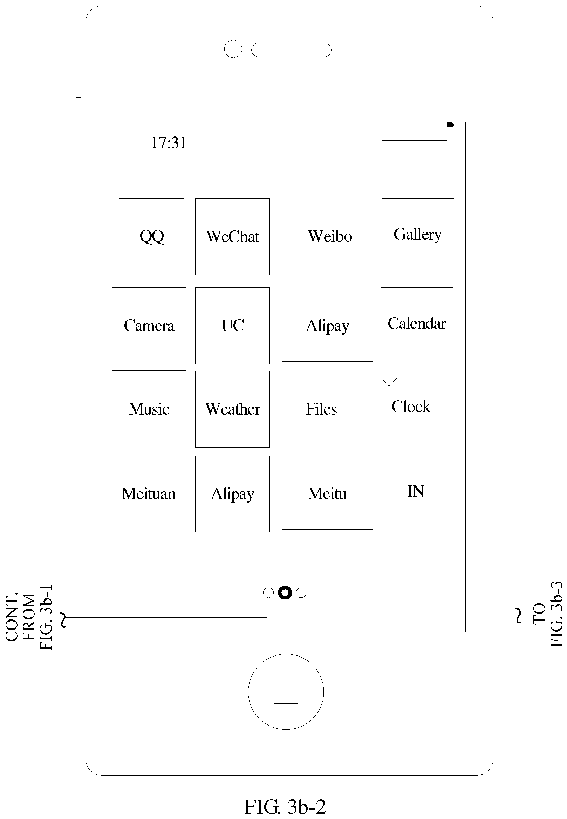

As shown in FIG. 2B, an image 5 is adjacent to an image 4. In FIG. 3a-2, D2 (2, 2) is adjacent to D2 (1, 4), and D2 (1, 1) is adjacent to D1 (4, 4).

S107B2. If the bonus point value corresponding to the first operation object is greater than or equal to the bonus point value corresponding to the second operation object, move the first operation object to the operation location at which the second operation object is located, and move the second operation object to the preset location at which the first operation object is located.

For example, as shown in FIG. 7c, if a bonus point value of the sorted first operation object D1 (2, 2) is 7 points, and a bonus point value of the second operation object D1 (2, 1) is also 7 points, the processor moves the first operation object to a location of D1 (2, 1), and moves the second operation object to a location of D1 (2, 2), as shown in FIG. 7d.

It should be noted that the second operation interface and the first operation interface in this embodiment of the present invention may be a same interface. That is, after the bonus point value of the first operation object is increased and the first operation object is sorted according to a bonus point value sorting rule, the preset location is on a same operation interface as the first operation object before the bonus point value of the first operation object is increased.

After a current location of the first operation object is obtained, if the current location is located before the preset location, the current location may not need to be arranged at the preset location. Alternatively, according to the foregoing description, a bonus point value of the operation object corresponding to the current location needs to be changed provided that the current location is not the preset location.

It should be noted that, when the operation object is a contact in an address book, operation objects only need to be sorted in descending order of bonus point values of all contacts in the address book. The bonus point value of the contact may be decided according to a frequency at which the user taps the contact. For a specific operation method, refer to sorting of icons. Details are not described herein in this embodiment of the present invention.

Preferably, the method for sorting multiple options in this embodiment of the present invention further includes the following step:
S109. Assign one bonus point value to each operation object in the M operation objects.

A specific implementation of step S109 is not limited in this embodiment of the present invention, is merely an example, and may be implemented in the following manner:
S901. Obtain a priority of each operation object.
S902. Assign a bonus point value to each operation object according to the priority of the operation object, so that each operation object is corresponding to one bonus point value.

Further, preferably, because operation objects have different priorities, to simultaneously assign bonus point values to all the operation objects, for step S901, a possible implementation includes:
S901A1. Obtain a creation time of each operation object.
S901A2. Arrange the operation objects in an order of the creation time of the operation objects, to obtain the priorities of the operation objects.

For step S901, another possible implementation includes:
S901B1. Obtain an order of initial letters corresponding to the operation objects.
S901B2. Arrange the operation objects in an order of the initial letters corresponding to the operation objects, to obtain the priorities of the operation objects.

Both the creation time of each operation object and the initial letter order may be obtained from the memory in the processor.

Referring to FIG. 8, an embodiment of the present invention further provides an apparatus for sorting multiple options. Function units in the apparatus for sorting multiple options are corresponding to the method for sorting multiple options. For details, refer to the descriptions in the method for sorting multiple options in the embodiments of the present invention. Details are not described herein in this embodiment of the present invention. As shown in FIG. 8, the apparatus 80 for sorting multiple options is applied to a terminal, the terminal has M operation objects and N operation interfaces, each operation interface includes operation locations distributed in m rows and n columns, each operation object is corresponding to one bonus point value, and the M operation objects are arranged at operation locations of at least one operation interface in descending order of bonus point values, where N, m, n, and M are positive integers greater than or equal to 1. As shown in FIG. 8, the apparatus 80 for sorting multiple options includes:
a receiving unit 801, configured to receive an operation instruction from a user when multiple operation objects that are located on a current operation interface of the terminal and that include a first operation object are displayed on the current operation interface;
a first obtaining unit 802, configured to: increase a bonus point value of the first operation object by a first preset integral according to the operation instruction, to obtain a current bonus point value of the first operation object;
a sorting unit 803, configured to arrange the M operation objects at operation locations of at least one operation interface in descending order of current bonus point values of the M operation objects; and
a display unit 804, configured to display a first operation interface on which the first operation object is located.

According to the apparatus for sorting multiple options in this embodiment of the present invention, a bonus point value is assigned to each operation object, after the operation instruction of the user is received, the first operation object is increased by the first preset bonus point value, and then, the M operation objects are sorted in descending order of the bonus point values and displayed on the first operation interface of the terminal. The apparatus provided in this embodiment of the present invention is simple, and when a bonus point value of any operation object changes, only corresponding bonus point value ranking needs to be obtained according to the updated bonus point value and then displayed. The method is easy to operate, and the operation objects can be dynamically sorted, so that user experience efficiency is improved.

Further, referring to FIG. 9, the sorting unit 803 includes:
a first determining module 8031, configured to determine whether there are two or more operation objects whose corresponding bonus point values are equal in the M operation objects;
a first obtaining module 8032a, configured to: when the first determining module 8031 determines that there are two or more operation objects whose corresponding bonus point values are equal in the M operation objects, obtain usage frequencies of the operation objects with equal bonus point values; and
a first sorting module 8033a, configured to: after the first obtaining module obtains the usage frequencies of the operation objects with equal bonus point values, sort the operation objects with equal bonus point values in descending order of the usage frequencies; or
a second obtaining module 8032b, configured to: when the first determining module 8031 determines that there are two or more operation objects whose corresponding bonus point values are equal in the M operation objects, obtain usage time of the operation objects with equal bonus point values; and
a second sorting module 8033b, configured to: after the second obtaining module obtains the usage time of the operation objects with equal bonus point values, successively sort the operation objects with equal bonus point values according to latest usage time of the operation objects.

Preferably, after the first operation object is sorted according to the bonus point value, a rule may be set for arranging the first operation object at a specified preset location, or a rule may be set provided that the first operation object is arranged at an operation location before a preset location. This is not limited in this embodiment of the present invention. For example, in a possible implementation, after the display unit 804 displays the first operation object on the first operation interface, referring to FIG. 10, the apparatus 80 for sorting multiple options further includes:
a second obtaining unit 805, configured to obtain a current location at which the first operation object is located on the first operation interface, where the current location is an order of an operation location at which the first operation object is arranged on the first operation interface;
a first determining unit 806, configured to determine whether the current location at which the first operation object is located on the first operation interface is a preset location;
a first update unit 807, configured to: after the first determining unit 806 determines that the current location at which the first operation object is located on the first operation interface is not the preset location, change the current bonus point value of the first operation object into a second preset bonus point value, where the second preset bonus point value is a bonus point value corresponding to an operation object arranged at the preset location; and
after the current bonus point value of the first operation object is changed into the second preset bonus point value, arrange the M operation objects at operation locations of at least one operation interface in descending order of current bonus point values of the M operation objects; and
the display unit 804 is further configured to: after the first update unit 807 arranges the M operation objects at operation locations of at least one operation interface in descending order of the current bonus point values of the M operation objects, display a second operation interface on which the first operation object is located.

For example, referring to FIG. 10, in another possible implementation, after the display unit 804 displays the first operation object on the first operation interface, the apparatus 80 for sorting multiple options further includes:
a third obtaining unit 808, configured to obtain a current location at which the first operation object is located on the first operation interface, where the current location is an order of an operation location at which the first operation object is arranged on the first operation interface;
a second determining unit 809, configured to determine whether the current location at which the first operation object is located on the first operation interface is after a preset location; and
a second update unit 810, configured to: change the current bonus point value of the first operation object into a second preset bonus point value, where the second preset bonus point value is a bonus point value corresponding to an operation object arranged at the preset location; and
after the current bonus point value of the first operation object is changed into the second preset bonus point value, arrange the first operation object at the preset location, and successively arrange the operation object located at the preset location and a remaining operation object at operation locations after the preset location, where the remaining operation object is an operation object at at least one operation location after the preset location; and
the display unit 804 is further configured to: after the second update unit 810 arranges the first operation object at the preset location, and successively arrange the operation object located at the preset location and the remaining operation object at the operation locations after the preset location, display a second operation interface on which the first operation object is located.

Further, preferably, the apparatus 80 for sorting multiple options further includes a fourth obtaining unit, a third determining unit, and a first sorting unit.

The fourth obtaining unit is configured to: after the second update unit arranges the first operation object at the preset location, obtain a current bonus point value of a second operation object, where the second operation object is an operation object at an operation location that is located before the preset operation location and that is adjacent to the preset operation location, and an operation object at the adjacent operation location is arranged at an operation location before the preset operation location in descending order of the bonus point values.

The third determining unit is configured to determine whether the bonus point value corresponding to the first operation object is greater than or equal to the bonus point value corresponding to the second operation object.

The first sorting unit is configured to: if the third determining unit determines that the bonus point value corresponding to the first operation object is greater than or equal to the bonus point value corresponding to the second operation object, move the first operation object to the operation location at which the second operation object is located, and move the second operation object to the preset location at which the first operation object is located.

Further, preferably, the apparatus further includes:
an assignment unit, configured to assign one bonus point value to each operation object in the M operation objects.

Further, preferably, the assignment unit includes:
a fourth obtaining module, configured to obtain a priority of each operation object; and
a value assignment module, configured to assign a bonus point value to each operation object according to the priority of the operation object, so that each operation object is corresponding to one bonus point value.

Further, preferably, in a possible implementation, the fourth obtaining module is specifically configured to:
obtain a creation time of each operation object; and
arrange the operation objects in an order of the creation time of the operation objects, to obtain the priorities of the operation objects.

Further, preferably, in another possible implementation, the fourth obtaining module is specifically configured to:
obtain an order of initial letters corresponding to the operation objects; and
arrange the operation objects in an order of the initial letters corresponding to the operation objects, to obtain the priorities of the operation objects.

FIG. 11 is a schematic structural diagram of a terminal according to an embodiment of the present invention. The terminal provided in this embodiment of the present invention may be used to implement the methods implemented in the embodiments of the present invention shown in FIG. 1 and FIG. 2A and FIG. 2B. For ease of description, only a part related to this embodiment of the present invention is shown. For specific technical details that are not disclosed, refer to the embodiments of the present invention shown in FIG. 1 and FIG. 2A and FIG. 2B.

The terminal may be a terminal device, such as a mobile phone, a tablet computer, a notebook computer, a UMPC (Ultra-mobile Personal Computer, ultra-mobile personal computer), a netbook, and a PDA (Personal Digital Assistant, personal digital assistant). In this embodiment of the present invention, an example in which a mobile terminal is a mobile phone is used for description. FIG. 11 shows a block diagram of a partial structure of a mobile phone 300 related to the embodiments of the present invention.

As shown in FIG. 11, the mobile phone 300 includes components such as an RF (radio frequency, radio frequency) circuit 320, a memory 330, an input unit 340, a display unit 350, a gravity sensor 360, an audio frequency circuit 370, a processor 380, and a power supply 390. Persons skilled in the art can understand that, the structure of the mobile phone shown in FIG. 11 does not constitute a limitation on the mobile phone, and the mobile phone may include more or fewer components than those shown in the figure, or may combine some components or have different component arrangements. Each component of the mobile phone 300 is described below in detail with reference to FIG. 11.

The RF circuit 320 may be configured to receive and send information, or receive and send a signal during a call. In particular, after receiving downlink information from a base station, the RF circuit 320 sends the downlink information to the processor 380 for processing. In addition, the RF circuit 320 sends uplink data to the base station. Generally, the RF circuit includes but is not limited to an antenna, at least one amplifier, a transceiver, a coupler, an LNA (low noise amplifier, low noise amplifier), a duplexer, and the like. In addition, the RF circuit 320 may further communicate with a network or another device by means of wireless communication. The wireless communication may use any communication standard or protocol, including but not being limited to GSM (global system of mobile communication, Global System for Mobile Communications), GPRS (general packet radio service, general packet radio service), CDMA (code division multiple access, Code Division Multiple Access), WCDMA (wideband code division multiple access, Wideband Code Division Multiple Access), LTE (long term evolution, Long Term Evolution), email, SMS (short messaging service, short message service), and the like.

The memory 330 may be configured to store a software program and a module. By running the software program and the module stored in the memory 330, the processor 380 executes various function applications of the mobile phone 300 and performs data processing. The memory 330 may mainly include a program storage area and a data storage area. The program storage area may store an operating system, and an application program required by at least one function (such as a sound playing function or an image playing function), and the like. The data storage area may store data (such as audio data, image data, or an address book) created according to use of the mobile phone 300, and the like. In addition, the memory 330 may include a high-speed random access memory, and may further include a nonvolatile memory, for example, at least one magnetic disk storage component, a flash memory component, or another volatile solid-state storage component.

The input unit 340 may be configured to: receive entered numeral or character information, and generate key signal input related to a user setting and function control of the mobile phone 300. Specifically, the input unit 340 may include a touchscreen 341 and another input device 342. The touchscreen 341 is also referred to as a touch panel and may collect a touch operation performed by a user on or near the touchscreen (such as an operation performed by a user on the touchscreen 341 or near the touchscreen 341 by using any proper object or accessory, such as a finger or a stylus), and drive a corresponding connection apparatus according to a preset program. Optionally, the touchscreen 341 may include two parts: a touch detection apparatus and a touch controller. The touch detection apparatus detects a touch orientation of the user, detects a signal brought by the touch operation, and sends the signal to the touch controller. The touch controller receives touch information from the touch detection apparatus, converts the touch information into touch point coordinates, sends the touch point coordinates to the processor 380, and can receive and execute a command sent by the processor 380. In addition, the touchscreen 341 may be implemented by using multiple types such as a resistive type, a capacitive type, an infrared ray, and a surface acoustic wave. The input unit 340 may include the another input device 342 in addition to the touchscreen 341. Specifically, the another input device 342 may include but is not limited to one or more of a physical keyboard, a function key (such as a volume control key or an on/off key), a trackball, a mouse, a joystick, or the like. The display unit 350 may be configured to display information entered by the user or information provided for the user and various menus of the mobile phone 300. The display unit 350 may include a display panel 351. Optionally, the display panel 341 may be configured by using an LCD (Liquid Crystal Display, liquid crystal display), an OLED (Organic Light-Emitting Diode, organic light-emitting diode), or the like. Further, the touchscreen 341 may cover the display panel 351. After detecting the touch operation on or near the touchscreen 341, the touchscreen 341 transmits the touch operation to the processor 380 to determine a type of a touch event, and then the processor 380 provides corresponding visual output on the display panel 351 according to the type of the touch event. In FIG. 11, the touchscreen 341 and the display panel 351 are used as two independent parts to implement input and input functions of the mobile phone 300. However, in some embodiments, the touchscreen 341 and the display panel 351 may be integrated to implement the input and output functions of the mobile phone 300.

The gravity sensor (gravity sensor) 360 may detect a value of acceleration in each direction (generally, three axes) of the mobile phone, may detect a value and a direction of gravity in a static mode, and may be used for an application that identifies a mobile phone gesture (such as screen orientation switching, related games, and magnetometer gesture calibration), a function related to vibration identification (such as a pedometer and a strike), and the like.

The mobile phone 300 may further include another sensor, such as a light sensor. Specifically, the light sensor may include an ambient light sensor and a proximity sensor. The ambient light sensor may adjust luminance of the display panel 341 according to brightness of ambient light, and the proximity sensor may detect whether an object is approaching or touches the mobile phone, and may close the display panel 341 or backlight when the mobile phone 300 approaches an ear. A gyroscope, a barometer, a hygrometer, a thermometer, an infrared sensor, and other sensors can be further configured for the mobile phone 300. Details are not described herein.

The audio frequency circuit 370, a loudspeaker 371, and a microphone 372 may provide audio interfaces between the user and the mobile phone 300. The audio frequency circuit 370 may receive audio data, convert the audio data into an electrical signal, and transmit the electrical signal to the loudspeaker 371, and the loudspeaker 371 converts the electrical signal into a sound signal for output. In addition, the microphone 372 converts a collected sound signal into an electrical signal, and the audio frequency circuit 370 receives the electrical signal and converts the electrical signal into audio data, and then outputs the audio data to the RF circuit 320, so as to send the audio data to, for example, another mobile phone, or output the audio data to the memory 330 for further processing.

The processor 380 is a control center of the mobile phone 300, uses various interfaces and lines to connect all parts of the entire mobile phone, and executes various functions of the mobile phone 300 and processes data by running or executing the software program and/or the module stored in the memory 330 and invoking data stored in the memory 330, so as to perform overall monitoring on the mobile phone. Optionally, the processor 380 may include one or more processing units. Preferably, the processor 380 may integrate an application processor and a modem processor. The application processor mainly processes an operating system, a user interface, an application program, and the like; and the modem processor mainly processes wireless communication. It may be understood that the foregoing modem processor may not be integrated into the processor 380.

The mobile phone 300 further includes the power supply 390 (such as a battery) that supplies power to each part. Preferably, the power supply may be logically connected to the processor 380 by using a power management system, so as to implement a management function such as charging, discharging, and power consumption management by using the power management system.

Although not shown in the figure, the mobile phone 300 may further include a WiFi (wireless fidelity, Wireless Fidelity) module, a Bluetooth module, and the like. Details are not described herein.

In this embodiment of the present invention, the memory 330 is further configured to store a parameter of a usage time of each operation object, a parameter of a usage frequency of each operation object, a creation time of each operation object, an initial letter order of each operation object, and related instructions for sorting operation objects in descending order of bonus point values, and sorting operation objects with equal bonus point values according to usage time or the usage frequencies when the bonus point values are equal.

The touchscreen is configured to receive an operation instruction from a user when multiple operation objects that are located on a current operation interface of the terminal and that include a first operation object are displayed on the current operation interface.

The processor 380 runs a program corresponding to executable program code by reading the executable program code stored in the memory 330, so as to:
increase a bonus point value of the first operation object by a first preset bonus point value according to the operation instruction, to obtain a current bonus point value of the first operation object;
arrange M operation objects at operation locations of at least one operation interface in descending order of current bonus point values of the M operation objects; and
display a first operation interface on which the first operation object is located.

According to the terminal in this embodiment of the present invention, a bonus point value is assigned to each operation object, after the operation instruction of the user is received, the first operation object is increased by the first preset bonus point value, and then, the M operation objects are sorted in descending order of the bonus point values and displayed on the first operation interface of the terminal. The method provided in the embodiments of the present invention is simple, and when a bonus point value of any operation object changes, only corresponding bonus point value ranking needs to be obtained according to the updated bonus point value and then displayed. The method is easy to operate, and the operation objects can be dynamically sorted, so that user experience efficiency is improved.

In short, the foregoing descriptions are merely examples of embodiments of the present invention, but are not intended to limit the protection scope of the present invention. Any modification, equivalent replacement, or improvement made without departing from the spirit and principle of the present invention shall fall within the protection scope of the present invention.

Finally, it should be noted that the foregoing embodiments are merely intended for describing the technical solutions of the present invention but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of the present invention.

## Claims

1. A method for sorting multiple options, wherein the method is applied to a terminal, the terminal has M operation objects and N operation interfaces, each operation interface comprises operation locations distributed in m rows and n columns, each operation object is corresponding to one bonus point value, and the M operation objects are arranged at operation locations of at least one operation interface in descending order of bonus point values, wherein N, m, n, and M are positive integers greater than or equal to 1, and the method comprises:
receiving an operation instruction from a user when multiple operation objects that are located on a current operation interface of the terminal and that comprise a first operation object are displayed on the current operation interface;
increasing a bonus point value of the first operation object by a first preset bonus point value according to the operation instruction, to obtain a current bonus point value of the first operation object;
arranging the M operation objects at operation locations of at least one operation interface in descending order of current bonus point values of the M operation objects; and
displaying a first operation interface on which the first operation object is located.

2. The method according to claim 1, wherein the arranging the M operation objects at operation locations of at least one operation interface in descending order of current bonus point values of the M operation objects comprises:
if there are two or more operation objects whose corresponding bonus point values are equal in the M operation objects, obtaining usage frequencies of the operation objects with equal bonus point values; and
sorting the operation objects with equal bonus point values in descending order of the usage frequencies of the operation objects with equal bonus point values; or
if there are two or more operation objects whose corresponding bonus point values are equal in the operation objects, obtaining usage time of the operation objects with equal bonus point values; and
according to the usage time of the operation objects with equal bonus point values, successively sorting the operation objects with equal bonus point values according to latest usage time of the operation objects.

3. The method according to claim 1, wherein after the displaying a first operation interface on which the first operation object is located, the method further comprises:
obtaining a current location at which the first operation object is located on the first operation interface, wherein the current location is an order of an operation location at which the first operation object is arranged on the first operation interface;
if the current location at which the first operation object is located on the first operation interface is not a preset location, changing the current bonus point value of the first operation object into a second preset bonus point value, wherein the second preset bonus point value is a bonus point value corresponding to an operation object arranged at the preset location;
after the current bonus point value of the first operation object is changed into the second preset bonus point value, arranging the M operation objects at operation locations of at least one operation interface in descending order of current bonus point values of the M operation objects; and
displaying a second operation interface on which the first operation object is located.

4. The method according to claim 1, wherein after the displaying a first operation interface on which the first operation object is located, the method further comprises:
obtaining a current location at which the first operation object is located on the first operation interface, wherein the current location is an order of an operation location at which the first operation object is arranged on the first operation interface;
if the current location at which the first operation object is located on the first operation interface is after a preset location, changing the current bonus point value of the first operation object into a second preset bonus point value, wherein the second preset bonus point value is a bonus point value corresponding to an operation object arranged at the preset location;
after the current bonus point value of the first operation object is changed into the second preset bonus point value, arranging the first operation object at the preset location, and successively arranging the operation object located at the preset location and a remaining operation object at operation locations after the preset location, wherein the remaining operation object is an operation object at at least one operation location after the preset location; and
displaying a second operation interface on which the first operation object is located.

5. The method according to claim 4, wherein after the arranging the first operation object at the preset location, the method further comprises:
obtaining a current bonus point value of a second operation object, wherein the second operation object is an operation object at an operation location that is located before the preset location and that is adjacent to the preset location, and an operation object at the adjacent operation location is arranged at an operation location before the preset location in descending order of the bonus point values; and
if the bonus point value corresponding to the first operation object is greater than or equal to the bonus point value corresponding to the second operation object, moving the first operation object to the operation location at which the second operation object is located, and moving the second operation object to the preset location at which the first operation object is located.

6. The method according to claim 1, wherein the method further comprises:
assigning one bonus point value to each operation object in the M operation objects.

7. The method according to claim 6, wherein the assigning one bonus point value to each operation object in the M operation objects comprises:
obtaining a priority of each operation object; and
assigning a bonus point value to each operation object according to the priority of the operation object, so that each operation object is corresponding to one bonus point value.

8. The method according to claim 7, wherein the obtaining a priority of each operation object comprises:
obtaining a creation time of each operation object; and
arranging the operation objects in an order of the creation time of the operation objects, to obtain the priorities of the operation objects; or
obtaining an order of initial letters corresponding to the operation objects; and arranging the operation objects in an order of the initial letters corresponding to the operation objects, to obtain the priorities of the operation objects.

9. An apparatus for sorting multiple options, wherein the apparatus is applied to a terminal, the terminal has M operation objects and N operation interfaces, each operation interface comprises operation locations distributed in m rows and n columns, each operation object is corresponding to one bonus point value, and the M operation objects are arranged at operation locations of at least one operation interface in descending order of bonus point values, wherein N, m, n, and M are positive integers greater than or equal to 1, and the apparatus comprises:
a receiving unit, configured to receive an operation instruction from a user when multiple operation objects that are located on a current operation interface of the terminal and that comprise a first operation object are displayed on the current operation interface;
a first obtaining unit, configured to: increase a bonus point value of the first operation object by a first preset bonus point value according to the operation instruction, to obtain a current bonus point value of the first operation object;
a sorting unit, configured to arrange the M operation objects at operation locations of at least one operation interface in descending order of current bonus point values of the M operation objects; and
a display unit, configured to display a first operation interface on which the first operation object is located.

10. The apparatus according to claim 9, wherein the sorting unit comprises:
a first determining module, configured to determine whether there are two or more operation objects whose corresponding bonus point values are equal in the M operation objects;
a first obtaining module, configured to: when the first determining module determines that there are two or more operation objects whose corresponding bonus point values are equal in the M operation objects, obtain usage frequencies of the operation objects with equal bonus point values; and
a first sorting module, configured to: after the first obtaining module obtains the usage frequencies of the operation objects with equal bonus point values, sort the operation objects with equal bonus point values in descending order of the usage frequencies; or
a second obtaining module, configured to: when the first determining module determines that there are two or more operation objects whose corresponding bonus point values are equal in the M operation objects, obtain usage time of the operation objects with equal bonus point values; and
a second sorting module, configured to: after the second obtaining module obtains the usage time of the operation objects with equal bonus point values, sort the operation objects with equal bonus point values according to latest usage time of the operation objects.

11. The apparatus according to claim 9, wherein the apparatus further comprises:
a second obtaining unit, configured to obtain a current location at which the first operation object is located on the first operation interface, wherein the current location is an order of an operation location at which the first operation object is arranged on the first operation interface;
a first determining unit, configured to determine whether the current location at which the first operation object is located on the first operation interface is a preset location; and
a first update unit, configured to: after the first determining unit determines that the current location at which the first operation object is located on the first operation interface is not the preset location, change the current bonus point value of the first operation object into a second preset bonus point value, wherein the second preset bonus point value is a bonus point value corresponding to an operation object arranged at the preset location; and
after the current bonus point value of the first operation object is changed into the second preset bonus point value, arrange the M operation objects at operation locations of at least one operation interface in descending order of current bonus point values of the M operation objects; and
the display unit is further configured to: after the first update unit arranges the M operation objects at operation locations of at least one operation interface in descending order of the current bonus point values of the M operation objects, display a second operation interface on which the first operation object is located.

12. The apparatus according to claim 9, wherein the apparatus further comprises:
a third obtaining unit, configured to obtain a current location at which the first operation object is located on the first operation interface, wherein the current location is an order of an operation location at which the first operation object is arranged on the first operation interface;
a second determining unit, configured to determine whether the current location at which the first operation object is located on the first operation interface is after a preset location; and
a second update unit, configured to: change the current bonus point value of the first operation object into a second preset bonus point value, wherein the second preset bonus point value is a bonus point value corresponding to an operation object arranged at the preset location; and
after the current bonus point value of the first operation object is changed into the second preset bonus point value, arrange the first operation object at the preset location, and successively arrange the operation object located at the preset location and a remaining operation object at operation locations after the preset location, wherein the remaining operation object is an operation object at at least one operation location after the preset location; and
the display unit is further configured to: after the second update unit arranges the first operation object at the preset location, and successively arranges the operation object located at the preset location and the remaining operation object at the operation locations after the preset location, display a second operation interface on which the first operation object is located.

13. The apparatus according to claim 12, wherein the apparatus further comprises: a fourth obtaining unit, a third determining unit, and a first sorting unit;
the fourth obtaining unit is configured to: after the second update unit arranges the first operation object at the preset location, obtain a current bonus point value of a second operation object, wherein the second operation object is an operation object at an operation location that is located before the preset operation location and that is adjacent to the preset operation location, and an operation object at the adjacent operation location is arranged at an operation location before the preset operation location in descending order of the bonus point values;
the third determining unit is configured to determine whether the bonus point value corresponding to the first operation object is greater than or equal to the bonus point value corresponding to the second operation object; and
the first sorting unit is configured to: if the third determining unit determines that the bonus point value corresponding to the first operation object is greater than or equal to the bonus point value corresponding to the second operation object, move the first operation object to the operation location at which the second operation object is located, and move the second operation object to the preset location at which the first operation object is located.

14. The apparatus according to claim 9, wherein the apparatus further comprises:
an assignment unit, configured to assign one bonus point value to each operation object in the M operation objects.

15. The apparatus according to claim 14, wherein the assignment unit comprises:
a fourth obtaining module, configured to obtain a priority of each operation object; and
a value assignment module, configured to assign a bonus point value to each operation object according to the priority of the operation object, so that each operation object is corresponding to one bonus point value.

16. The apparatus according to claim 15, wherein the fourth obtaining module is specifically configured to:
obtain a creation time of each operation object; and
arrange the operation objects in an order of the creation time of the operation objects, to obtain the priorities of the operation objects; or
the fourth obtaining module is specifically configured to:
obtain an order of initial letters corresponding to the operation objects; and
arrange the operation objects in an order of the initial letters corresponding to the operation objects, to obtain the priorities of the operation objects.

17. A terminal, wherein the terminal has M operation objects and N operation interfaces, each operation interface comprises operation locations distributed in m rows and n columns, each operation object is corresponding to one bonus point value, and the M operation objects are arranged at operation locations of at least one operation interface in descending order of bonus point values, wherein N, m, n, and M are positive integers greater than or equal to 1, and the terminal comprises: at least one processor, at least one touchscreen, and a memory, and the memory is configured to store executable program code;
the touchscreen is configured to receive an operation instruction from a user when multiple operation objects that are located on a current operation interface of the terminal and that comprise a first operation object are displayed on the current operation interface; and
the processor runs a program corresponding to the executable program code by reading the executable program code stored in the memory, so as to:
increase a bonus point value of the first operation object by a first preset bonus point value according to the operation instruction, to obtain a current bonus point value of the first operation object;
arrange the M operation objects at operation locations of at least one operation interface in descending order of current bonus point values of the M operation objects; and
display a first operation interface on which the first operation object is located.
